# FASCICULE DE BREVET EUROPEEN

(11) **EP 1 413 815 B1**
(45) Date de publication et mention de la délivrance du brevet: **12.03.2008**
(21) Numéro de dépôt: 03356161.4
(22) Date de dépôt: 20.10.2003
(51) Int. Cl.: F16L 23/08

(54) **Dispositif de raccordement de deux tubes possédant une extrémité évasée**
Kupplung für zwei Rohre mit aufgeweiteten Enden
Coupling for two flared-end pipes

(30) Priorité: 22.10.2002 FR 0213158
(43) Date de publication de la demande: 28.04.2004
(73) Titulaire: COMAP, 69008 Lyon (FR)
(72) Inventeur: Le Clinche, Pascal, 69008 Lyon (FR)
(74) Mandataire: Maureau, Philippe

(56) Documents cités:
- EP-A- 0 100 580
- DE-B- 1 035 989
- US-A- 2 439 161
- US-A- 3 307 862

## Description

La présente invention se rapporte à un dispositif de raccordement, et à un procédé de raccordement, de deux tubes destinés à conduire un fluide, ces tubes pouvant présenter une âme métallique ainsi qu'un gainage interne et externe en matière synthétique.

Il est déjà connu d'utiliser une douille de sertissage pour raccorder des tubes possédant une âme métallique. Le tube, qui comporte généralement une couche intérieure en matière synthétique, une âme en aluminium par exemple, et une enveloppe externe en matière synthétique, est emmanché et serti sur une canule à l'aide d'un outil de sertissage. Une douille de sertissage préalablement emmanchée sur l'extrémité du tube à raccorder permet de réaliser ce sertissage.

Il est également connu de réaliser des raccords instantanés à l'aide de dispositifs comprenant une bague d'accrochage. Celle-ci présente une couronne annulaire dotée de dents sensiblement radiales et inclinées par rapport à l'axe du raccord. Lorsque le tube à raccorder est inséré dans la bague d'accrochage, ces dents n'offrent aucune résistance et permettent donc l'introduction du tube. En revanche, lorsque l'on souhaite retirer ce tube, ces dents prennent appui sur la surface extérieure du tube et empêchent l'extraction de celui-ci.

Néanmoins, ces différents dispositifs de raccordement sont relativement complexes à réaliser, et ne peuvent pas toujours empêcher le fluide circulant dans les tubes de venir au contact de l'âme métallique de ceux-ci. De plus, ces dispositifs de raccordement ne sont pas toujours démontables.

Les documents DE 10 35 989, US 3 307 862 et US 2 439 161 décrivent des raccords classique de type démontables pour des tubes monocouches.

Le document EP 0 100 580 décrit un dispositif de raccordement indémontable pour tubes comportant un revêtement plastique intérieur.

La présente invention a pour but de résoudre les problèmes évoqués précédemment, et concerne à cet effet un dispositif de raccordement de deux tubes présentant une âme métallique ainsi qu'un gainage interne et externe en matière synthétique, destinés à conduire un fluide, caractérisé en ce qu'il comprend les deux tubes, deux bagues d'accrochage et un collier de serrage et en ce que :
- chacun des deux tubes présente une extrémité évasée autour de laquelle est positionnée une bague d'accrochage,
- cette bague d'accrochage est réalisée à l'aide d'une collerette qui, d'une part, vient en appui contre l'extrémité évasée du tube, et d'autre part, présente un épaulement externe prolongé axialement par des dents entourant ladite extrémité évasée, ces dents comportant chacune une extrémité libre et délimitant des créneaux intercalaires dont la largeur est supérieure à celle des dents,
- chacune de ces dents est dotée, du côté de son extrémité libre, d'un bourrelet orienté vers l'extérieur qui s'étend sur une longueur inférieure à la moitié de la longueur de ladite dent,
- les dents de l'une des deux bagues d'accrochage sont aptes à être insérées dans les créneaux de l'autre bague d'accrochage, de façon à définir une gorge annulaire délimitée alternativement par les bourrelets de l'une et de l'autre des deux bagues d'accrochage,
- un collier de serrage réglable, pourvu d'une nervure interne annulaire, est destiné à être positionné autour desdites bagues d'accrochage de façon à ce que cette nervure interne soit logée dans ladite gorge annulaire et exerce des contraintes axiales de sens opposé sur les bourrelets de l'une et de l'autre des deux bagues d'accrochage.

Ainsi, un dispositif de raccordement selon l'invention fait appel à un nombre limité de pièces qui peuvent être aisément assemblées. De plus les tubes utilisés comprennent une âme métallique intercalée entre deux couches en matière synthétique, les extrémités évasées des deux tubes étant comprimées l'une contre l'autre de façon à garantir l'étanchéité du dispositif, il en découle que le fluide circulant dans les tubes ne peut pas venir au contact des âmes métalliques desdits tubes. Enfin, ce dispositif est très facilement démontable, puisqu'il suffit d'ôter le collier de serrage pour libérer les deux bagues d'accrochage.

Avantageusement, chacune des deux extrémités évasées est contenue dans un plan sensiblement transversal aux tubes.

Préférentiellement, chacune des deux bagues d'accrochage est monobloc. Dans ce cas, chacune des deux bagues d'accrochage doit être positionnée autour de l'extrémité du tube qui lui correspond avant de procéder à l'évasement de cette extrémité.

En revanche, comme l'extrémité de chaque tube est préalablement évasée, il est alors possible d'utiliser, par exemple, une bague d'accrochage fendue pouvant être radialement écartée, ou encore une bague d'accrochage réalisée en au moins deux parties, ou encore une bague d'accrochage monobloc possédant un diamètre supérieur à celui de l'extrémité évasée, cette bague d'accrochage venant en butée, non pas contre l'extrémité évasée du tube, mais contre un épaulement externe présenté par une bague annulaire réalisée en deux parties et préalablement positionnée autour du tube.

Préférentiellement encore, le collier de serrage réglable est monobloc. Cependant, ce collier de serrage réglable peut également être réalisé en au moins deux parties.

Avantageusement, en coupe transversale, la nervure interne du collier de serrage est sensiblement en forme de V.

Avantageusement encore, chacun des bourrelets des deux bagues d'accrochage comporte un pan incliné pouvant servir d'appui à la nervure interne du collier de serrage.

Avantageusement, la bague d'accrochage est réalisée à l'aide d'une collerette présentant un épaulement externe prolongé axialement par des dents qui, d'une part, comportent chacune une extrémité libre, et d'autre part, délimitent des créneaux intercalaires dont la largeur est supérieure à celle des dents, chacune de ces dents étant dotée, du côté de son extrémité libre, d'un bourrelet orienté vers l'extérieur qui s'étend sur une longueur inférieure à la moitié de la longueur de ladite dent.

Enfin, la présente invention se rapporte également à un procédé de raccordement de deux tubes présentant une âme métallique ainsi qu'un gainage interne et externe en matière synthétique destinés à conduire un fluide, caractérisé en ce qu'il comprend les étapes consistant à :
- évaser une extrémité de chacun des deux tubes,
- maintenir lesdites extrémités évasées au contact l'une de l'autre,
- exercer des contraintes axiales de sens opposé sur chacune des extrémités évasées afin de les comprimer.

Le maintien des deux tubes et l'application de contraintes axiales de sens opposé sur les extrémités évasées des deux tubes sont alors avantageusement réalisés à l'aide de deux bagues d'accrochage et d'un collier de serrage réglable tels que décrits précédemment.

L'invention sera mieux comprise à l'aide de la description détaillée qui est exposée ci-dessous en regard du dessin annexé dans lequel :
La figure 1 est une vue en perspective d'une extrémité d'un tube à raccorder.
La figure 2 est une vue en perspective de la bague d'accrochage destinée à être positionnée autour de l'extrémité évasée du tube représenté à la figure 1.
La figure 3 est une vue en perspective d'un collier de serrage réglable destiné à être positionné autour des deux bagues d'accrochage.
La figure 4 est une vue en perspective d'un dispositif de raccordement avec omission du collier de serrage réglable.
La figure 5 est une vue en coupe longitudinale d'un dispositif de raccordement selon l'invention au cours de l'opération de serrage du collier.
La figure 6 est une vue en perspective d'un autre dispositif de raccordement utilisant un collier de serrage réalisé en deux parties.

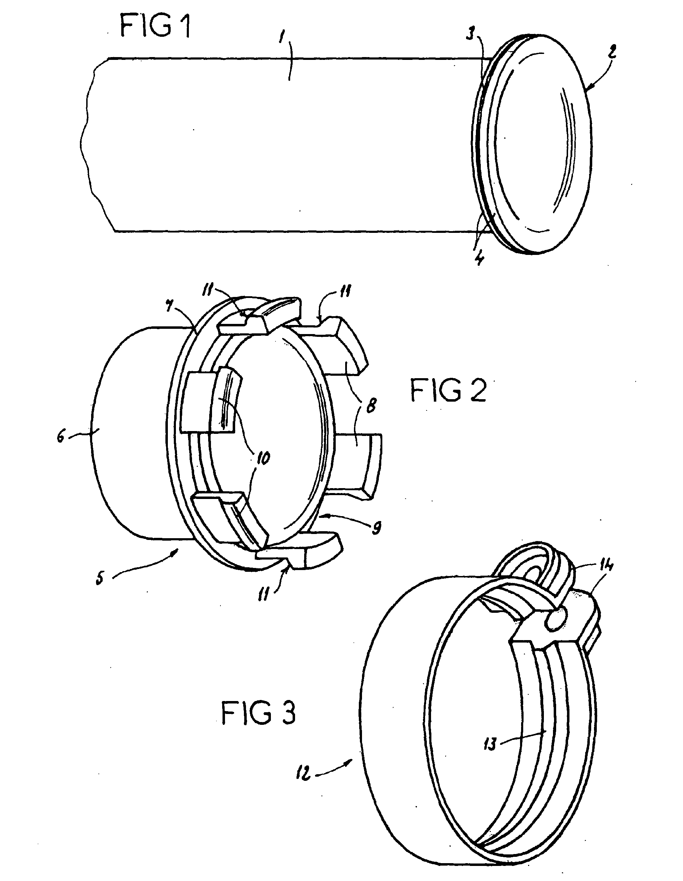

A la figure 1 est représenté un tube 1 possédant une paroi latérale et une extrémité évasée 2, cette dernière faisant un angle de 90° environ avec la paroi latérale. Ce tube 1 comprend une âme 3 métallique intermédiaire, par exemple en aluminium, ainsi qu'un gainage 4 interne et externe en matière synthétique, par exemple en polyéthylène réticulé.

Une bague d'accrochage 5 monobloc est représentée à la figure 2. Cette bague d'accrochage 5, qui peut être réalisée en métal ou en matière plastique par exemple, est constituée à partir d'une collerette 6 qui présente un épaulement externe 7 prolongé axialement par des dents 8 comportant chacune une extrémité libre. Ces dents 8 permettent de délimiter des créneaux 9 intercalaires dont la largeur est sensiblement supérieure à celle des dents. De plus, chacune de ces dents 8 est dotée, du côté de son extrémité libre, d'un bourrelet 10 orienté vers l'extérieur qui, d'une part, s'étend sur une longueur sensiblement inférieure à la moitié de la longueur de ladite dent 8, et d'autre part, comporte un pan incliné 11.

Un collier de serrage 12 réglable monobloc tel que représenté à la figure 3 peut être réalisé en métal ou encore en matière plastique par exemple. Ce collier de serrage 12 présente, d'une part, une nervure interne 13 annulaire qui est sensiblement en forme de V en coupe transversale, et d'autre part, deux extrémités 14 planes orientées vers l'extérieur et situées en regard l'une de l'autre. Ces extrémités 14 comportent chacune un orifice fileté dans lequel peut être introduit une vis (non représentée) afin d'assurer le réglage du diamètre dudit collier de serrage 12.

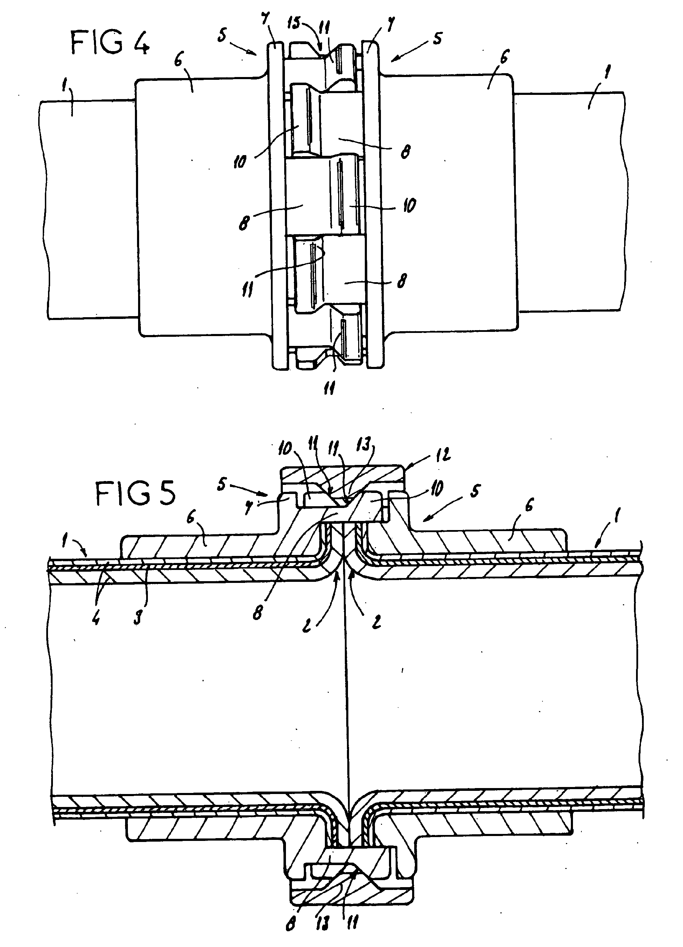

Un dispositif de raccordement selon l'invention est représenté aux figures 4 et 5. Une bague d'accrochage 5 est positionnée autour de l'extrémité évasée 2 de chacun des tube 1 à raccorder. Plus précisément, avant d'être évasée, l'extrémité de chacun des tubes 1 est tout d'abord glissée à travers la collerette 6 de la bague d'accrochage 5 qui lui correspond. Cette extrémité est ensuite évasée, la collerette 6 étant placée en appui contre l'extrémité évasée 2, et les dents 8 étant alors situées autour de cette extrémité évasée 2.

Les extrémités évasés 2 des deux tubes 1 sont ensuite placées au contact l'une de l'autre par engagement des dents 8 de l'une des deux bagues d'accrochage 5 dans les créneaux 9 de l'autre bague d'accrochage 5. Ce faisant, les bourrelets 10 des deux bagues d'accrochage 5 permettent de définir une gorge annulaire 15 délimitée alternativement par les pans inclinés 11 de l'une et de l'autre des deux bagues d'accrochage 5.

Le collier de serrage 12 réglable est finalement positionné autour des deux bagues d'accrochage 5 de façon à ce que sa nervure interne 13 annulaire se loge dans la gorge annulaire 15 par complémentarité de forme. En agissant sur la vis (non représentée) traversant les orifices des extrémités 14 du collier de serrage 12 réglable, le diamètre de ce dernier diminue, et la nervure interne 13 exerce par conséquent des contraintes axiales de sens opposé sur les pans inclinés 11 des bourrelets 10 de l'une et de l'autre des deux bagues d'accrochage 5 afin de pénétrer progressivement dans la gorge annulaire 15. Chacune des deux collerettes 6 des bagues d'accrochage 5 étant en appui contre l'extrémité évasée 2 du tube 1 qui lui correspond, les extrémités évasées 2 sont amenées à se plaquer l'une contre l'autre et garantissent de ce fait un raccordement parfaitement étanche. Un fluide traversant les deux tubes 1 ne pourra donc pas venir au contact de l'âme métallique 3 de ces derniers.

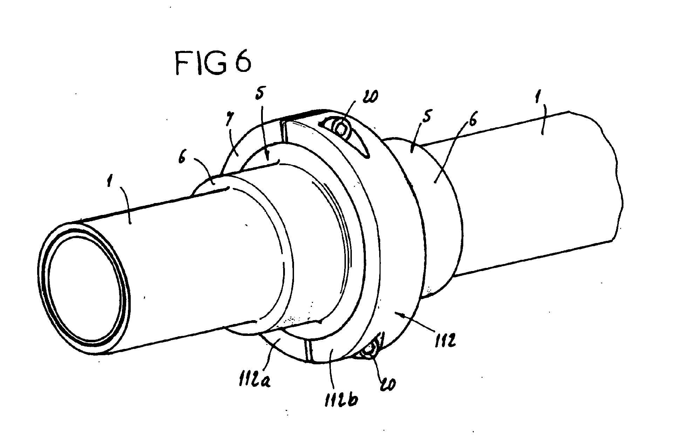

Un autre dispositif de raccordement selon l'invention est représenté à la figure 6. Ce dispositif de raccordement ne diffère de celui décrit précédement que par le fait qu'il comprend un collier de serrage 112 réglable réalisé en deux parties 112a, 112b identiques. Dans ce cas, il est nécessaire d'utiliser deux vis 20 afin d'assurer la fixation du collier de serrage 112 sur les bagues d'accrochage 5.

Les dispositifs de raccordement selon l'invention sont très facilement démontables puisqu'il suffit de desserrer le collier de serrage 12, 112 en agissant sur la ou les vis, puis d'ôter ledit collier, et enfin de désengager les deux bagues d'accrochage 5 en les translatant dans des sens opposés.

Les dispositifs de raccordement décrits précédemment prévoient que la collerette 6 de chacune des deux bagues d'accrochage 5 vient en appui contre l'extrémité évasée 2 du tube 1 qui lui correspond. Néanmoins, on peut également prevoir que la collerette 6 est directement fixée, par exemple par sertissage, dans la paroi latérale du tube 1 qui lui correspond. Dans ce cas, la collerette 6 n'a plus à venir nécessairement au contact de l'extrémité évasée 2.

Enfin, en fonction de l'agencement retenu, il est possible de prévoir un ou plusieurs joints de façon à renforcer l'étanchéité.

## Revendications

1. Dispositif de raccordement de deux tubes (1) destinés à conduire un fluide, le dispositif de raccordement comprenant les deux tubes (1), deux bagues d'accrochage (5) et un collier de serrage (12, 112):
- chaque bague d'accrochage est réalisée à l'aide d'une collerette (6) comprenant axialement des dents (8), ces dents comportant chacune une extrémité libre et délimitant des créneaux (9) intercalaires dont la largeur est supérieure à celle des dents,
- chacune de ces dents est dotée, du côté de son extrémité libre, d'un bourrelet (10) orienté vers l'extérieur s'étendant sur une longueur inférieure à la moitié de la longueur de ladite dent,
- les dents de l'une des deux bagues d'accrochage sont aptes à être insérées dans les créneaux de l'autre bague d'accrochage, de façon à définir une gorge annulaire (15) délimitée alternativement par les bourrelets de l'une et de l'autre des deux bagues d'accrochage,
- le collier de serrage (12, 112) réglable, pourvu d'une nervure interne (13) annulaire, est destiné à être positionné autour desdites bagues d'accrochage de façon à ce que cette nervure interne soit logée dans ladite gorge annulaire et exerce des contraintes axiales de sens opposé sur les bourrelets de l'une et de l'autre des deux bagues d'accrochage,
**caractérisé en ce que :**
- chaque tube (1) présente une âme (3) métallique ainsi qu'un gainage (4) interne et externe en matière synthétique,
- chacun des deux tubes présente une extrémité évasée (2) autour de laquelle est positionnée une bague d'accrochage (5),
- la collerette (6), d'une part, vient en appui contre l'extrémité évasée du tube, et d'autre part, présente un épaulement externe (7) prolongé axialement par les dents (8) entourant ladite extrémité évasée.

2. Dispositif de raccordement selon la revendication 1, **caractérisé en ce que** chacune des deux extrémités évasées (2) est contenue dans un plan sensiblement transversal aux tubes (1).

3. Dispositif de raccordement selon l'une quelconque des revendications 1 ou 2, **caractérisé en ce que** chacune des deux bagues d'accrochage (5) est monobloc.

4. Dispositif de raccordement selon l'une quelconque des revendications 1 ou 2, **caractérisé en ce que** chacune des bagues d'accrochage est réalisée en au moins deux parties.

5. Dispositif de raccordement selon l'une quelconque des revendications 1 à 4, **caractérisé en ce que** le collier de serrage (12) réglable est monobloc.

6. Dispositif de raccordement selon l'une quelconque des revendications 1 à 4, **caractérisé en ce que** le collier de serrage (112) réglable est réalisé en au moins deux parties (112a, 112b).

7. Dispositif de raccordement l'une quelconque des revendications 1 à 6, **caractérisé en ce que**, en coupe transversale, la nervure interne (13) du collier de serrage (12, 112) est sensiblement en forme de V.

8. Dispositif de raccordement selon l'une quelconque des revendications 1 à 7, **caractérisé en ce que** chacun des bourrelets (10) des deux bagues d'accrochage (5) comporte un pan incliné (11) pouvant servir d'appui à la nervure interne (13) du collier de serrage (12, 112).

9. Dispositif de raccordement selon l'une quelconque des revendications 1 à 8, **caractérisé en ce que** au moins une bague d'accrochage (5) est réalisée à l'aide d'une collerette (6) présentant un épaulement externe (7) prolongé axialement par des dents (8) qui, d'une part, comportent chacune une extrémité libre, et d'autre part, délimitent des créneaux (9) intercalaires dont la largeur est supérieure à celle des dents, chacune de ces dents étant dotée, du côté de son extrémité libre, d'un bourrelet (10) orienté vers l'extérieur qui s'étend sur une longueur inférieure à la moitié de la longueur de ladite dent.

10. Procédé de raccordement de deux tubes (1) présentant une âme (3) métallique ainsi qu'un gainage (4) interne et externe en matière synthétique, destinés à conduire un fluide, à l'aide d'un dispositif selon l'une des revendications précédentes **caractérisé en ce qu'**il comprend les étapes consistant à :
- évaser une extrémité (2) de chacun des deux tubes,
- maintenir lesdites extrémités évasées au contact l'une de l'autre,
- exercer des contraintes axiales de sens opposé sur chacune des extrémités évasées afin de les comprimer.

## Claims

1. Device for connecting two tubes (1) intended to carry a fluid, the connection device including the two tubes (1), two lock-on rings (5) and a clamp collar (12, 112) :
- each lock-on ring is made by means of a flange (6) that axially includes teeth (8), these teeth each comprising a free end and defining divider slots (9) whereof the width is larger than the teeth,
- each of these teeth is fitted, on its free end side, with an outward facing bead (10) that extends over a length less than half the length of said tooth,
- the teeth of one of the two lock-on rings are capable of being inserted into the slots of the other lock-on ring, so as to define an annular groove (15) defined alternately by the beads of one and the other of the two lock-on rings,
- the adjustable clamp collar (12, 112), provided with an annular internal rib (13), is intended to be positioned around said lock-on rings in such a way that this internal rib is accommodated in said annular grove and exerts opposite direction axial constraints on the beads of one and the other of the two lock-on rings,
**characterised in that**:
- each tube (1) has a metal core (3) and inner and outer cladding (4) made of a synthetic material,
- each of the two tubes has a flared end (2) around which a lock-on ring (5) is positioned,
- the flange (6), on the one hand, is seated against the flared end of the tube, and on the other hand, has an external shoulder (7) axially extended by the teeth (8) surrounding said flared end.

2. Connection device according to claim 1, **characterised in that** each of the two flared ends (2) is contained in a plane substantially transverse to the tubes (1).

3. Connection device according to any one of claims 1 or 2, **characterised in that** each of the two lock-on rings (5) is cast in a single piece.

4. Connection device according to any one of claims 1 or 2, **characterised in that** each of the lock-on rings is made out of at least two parts.

5. Connection device according to any one of claims 1 to 4, **characterised in that** the adjustable clamp collar (12) is cast in a single piece.

6. Connection device according to any one of claims 1 to 4, **characterised in that** the adjustable clamp collar (112) is made out of at least two parts (112a, 112b).

7. Connection device any one of claims 1 to 6, **characterised in that**, in transverse cross-section, the internal rib (13) of the clamp collar (12, 112) is substantially V-shaped.

8. Connection device according to any one of claims 1 to 7, **characterised in that** each of the beads (10) of the two lock-on rings (5) comprises an inclined piece (11) able to act as a seat for the internal rib (13) of the clamp collar (12, 112).

9. Connection device according to any one of claims 1 to 8, **characterised in that** at least one lock-on ring (5) is made by means of a flange (6) that has an external shoulder (7) axially extended by teeth (8) which, on the one hand, each comprise a free end, and on the other hand, define divider slots (9) whereof the width is larger than that of the teeth, each of these teeth being fitted, on its free end side, with an outward facing bead (10) which extends over a length less than half the length of said tooth.

10. Method of connecting two tubes (1) that have a metal core (3) and inner and outer cladding (4) made of a synthetic material, intended to conduct a fluid by means of a device according to one of the previous claims, **characterised in that** it includes the stages consisting in:
- flaring one end (2) of each of the two tubes,
- keeping said flared ends in contact with each other,
- exerting opposite direction axial constraints on each of the flared ends in order to compress them.

## Patentansprüche

1. Kupplungsvorrichtung für zwei Rohre (1), die zum Leiten eines Fluids bestimmt sind, wobei die Kupplungsvorrichtung die zwei Rohre (1), zwei Verbindungsringe (5) und einen Klemmring (12, 112) umfasst:
- jeder Verbindungsring ist mittels eines Kragens (6) hergestellt, der Zähne (8) in axialer Ausrichtung umfasst, wobei jeder dieser Zähne ein freies Ende hat und eingeschobene Zwischenräume (9) abgrenzt, deren Breite größer ist als diejenige der Zähne,
- jeder dieser Zähne ist auf der Seite seines freien Endes mit einem nach außen gerichteten Wulst (10) versehen, der sich über eine Tiefe erstreckt, die weniger als die Hälfte der Tiefe dieses Zahns beträgt,
- die Zähne des einen der zwei Verbindungsringe können in die Zwischenräume des anderen Verbindungsrings so eingeführt werden, dass eine ringförmige Kehle (15) definiert wird, die abwechselnd durch die Wulste des eines beziehungsweise des anderen der zwei Verbindungsringe begrenzt wird,
- der verstellbare Klemmring (12, 112), versehen mit einer ringförmigen internen Rippe (13), dient dazu, so um die Verbindungsringe gelegt zu werden, dass die interne Rippe in der ringförmigen Kehle zu liegen kommt und einander entgegengesetzte axiale Kräfte auf die Wulste des einen und des anderen der zwei Verbindungsringe ausübt,
**dadurch gekennzeichnet, dass**:
- jedes Rohr (1) einen Metallkern (3) sowie eine innere und äußere Umhüllung (4) aus Kunststoff aufweist,
- jedes der zwei Rohre ein aufgeweitetes Ende (2) hat, um das ein Verbindungsring (5) angeordnet ist,
- der Kragen (6) einerseits gegen das aufgeweitete Ende des Rohres zu liegen kommt und andererseits eine äußere Schulter (7) aufweist, die in axialer Richtung mit den Zähnen (8) versehen ist, die dieses aufgeweitete Ende umgeben.

2. Kupplungsvorrichtung nach Anspruch 1, **dadurch gekennzeichnet, dass** jedes der zwei aufgeweiteten Enden (2) in einer Ebene liegt, die zu den Rohren (1) im wesentlichen transversal ist.

3. Kupplungsvorrichtung nach einem der Ansprüche 1 oder 2, **dadurch gekennzeichnet, dass** jeder der zwei Verbindungsringe (5) aus einem Stück besteht.

4. Kupplungsvorrichtung nach einem der Ansprüche 1 oder 2, **dadurch gekennzeichnet, dass** jeder der Verbindungsringe aus mindestens zwei Teilen hergestellt ist.

5. Kupplungsvorrichtung nach einem der Ansprüche 1 bis 4, **dadurch gekennzeichnet, dass** der verstellbare Klemmring (12) aus einem Stück besteht.

6. Kupplungsvorrichtung nach einem der Ansprüche 1 bis 4, **dadurch gekennzeichnet, dass** der verstellbare Klemmring (112) aus mindestens zwei Teilen (112a, 112b) hergestellt ist.

7. Kupplungsvorrichtung nach einem der Ansprüche 1 bis 6, **dadurch gekennzeichnet, dass** die interne Rippe (13) des Klemmrings (12, 112) einen im wesentlichen V-förmigen Querschnitt hat.

8. Kupplungsvorrichtung nach einem der Ansprüche 1 bis 7, **dadurch gekennzeichnet, dass** jeder der Wulste (10) der zwei Verbindungsringe (5) eine abgeschrägte Kante (11) hat, die der internen Rippe (13) des Klemmrings (12, 112) als Anschlag dienen kann.

9. Kupplungsvorrichtung nach einem der Ansprüche 1 bis 8, **dadurch gekennzeichnet, dass** mindestens ein Verbindungsring (5) mittels eines Kragens (6) hergestellt ist, der eine äußere Schulter (7) aufweist, die in axialer Richtung mit den Zähnen (8) versehen ist, die einerseits jeder ein freies Ende haben und andererseits eingeschobene Zwischenräume (9) aufweisen, deren Breite größer ist als diejenige der Zähne, wobei jeder dieser Zähne auf der Seite seines freien Endes mit einem nach außen gerichteten Wulst (10) versehen ist, der sich über eine Tiefe erstreckt, die kleiner ist als die Hälfte der Tiefe dieses Zahns.

10. Verfahren zum Verbinden von zwei Rohren (1), die einen Metallkern (3) sowie eine interne und eine externe Umhüllung (4) aus Kunststoff umfassen und die mit Hilfe einer Vorrichtung nach einem der vorhergehenden Ansprüche zum Leiten eines Fluids bestimmt sind, **dadurch gekennzeichnet, dass** es die folgenden Schritte umfasst:
- Aufweiten eines Endes (2) an jedem der zwei Rohre,
- diese aufgeweiteten Enden in Kontakt miteinander zu halten,
- einander entgegengesetzte axiale Kräfte auf jedes der aufgeweiteten Enden auszuüben, um sie zusammenzudrücken.
